# EUROPEAN PATENT APPLICATION

(11) **EP 1 026 199 A1**
(43) Date of publication of application: **09.08.2000**
(21) Application number: 99102103.1
(22) Date of filing: 03.02.1999
(51) Int. Cl.: C08L 23/10, B29C 49/00

(54) **Polyolefins and uses thereof**

(71) Applicant: FINA RESEARCH S.A., B-7181 Seneffe (Feluy) (BE)
(72) Inventor: Demain, Axel, 1457 Tourinnes-Saint-Lambert (BE)

(57) **Abstract**

A package comprising a wall which comprises a polymer composition, wherein the polymer composition comprises at least 10% be weight of a syndiotactic polypropylene and has a flexural modulus in the range of from 100 to 1000 Mpa.

## Description

The present invention relates to a package comprising a wall made of a polymer composition, to the use of a polyolefin as a component of a packaging wall and to a process for the production of a moulded article, such as a package.

Polymer compositions such as polyolefin compositions are well known in the production of packages, such as containers. For many applications a flexible package is required such as a squeezable container or "squeeze bottle". Flexibility or low rigidity is desired for the production of squeezable containers which allow a "drop-by-drop" flow of liquid from the container. Most polymers currently used for this application must be made into a container with a drastically decreased wall thickness to compensate for the rigidity of the polymer. This is disadvantageous because the water vapour barrier of the containers is lowered and can result in egress of the liquid contained in the container by evaporation, thereby reducing the shelf-life of the product. In addition, thin walls are prone to defects which can mechanically weaken them.

It is often desirable for flexible packages to be relatively transparent. This is particularly the case in cosmetic, health, beauty care and household products where the consumer wishes to see the exact colour of the contained product. Transparency is also useful so that the exact level of the contained liquid can be ascertained visually and the quality of the product can be assessed. This is particularly important in the medical field where any deposition or sedimentation of liquid medicines needs to be assessed. It is frequently the case that, to obtain the required transparency, polymer compositions used in the manufacture of packages must incorporate special additives such as nucleating agents or clarifying agents. Whilst these agents can make the wall or walls of the package transparent by localising or inhibiting crystallisation of the polymer, they suffer from a drawback that the agent can migrate into the packaged contents and may even chemically react with the contents inside the package.

Various processes exist for the manufacture of packages, especially small containers, made from polymers. These include injection blow-moulding, injection moulding and extrusion blow-moulding. Injection blow-moulding is highly favoured because high fidelity production of containers is possible, especially those with complicated shapes. In addition, the geometry and size of the neck of the container may be controlled very accurately and this can help to avoid leaks between the cap and the neck of the container. Typically, injection blow-moulding requires an injection moulding step in which, say, a polypropylene at a temperature of around 200 to 280°C is introduced into an injection mould cavity which is at a temperature of at least 110°C. The preform is then transferred to a second cavity where it is blow-moulded into a final product before cooling and ejection from the cavity.

Various polymers including polyolefins are known in the production of packages, especially by injection blow-moulding. For example, low density polyethylene has good impact properties and low rigidity allowing squeeze bottle manufacture. However, this polymer has very poor transparency. Homopolymeric polypropylene may be nucleated but can only manage a "cloudy" transparency. The polymer also has a high rigidity, requiring down-gauging of the wall thickness of the containers thereby resulting in poor water vapour barrier properties and poor impact resistance. A random copolymeric polypropylene has lower rigidity than homopolymeric polypropylene and reasonable transparency and impact properties. However, for good transparency, this polymer needs to be nucleated with a nucleating agent. Polyethylene terephthalate is well-known in the production of relatively transparent packages but is very difficult to process in injection blow-moulding and is very rigid. Polyvinyl chloride has a good balance of optics and rigidity but is much more difficult to process. This polymer also suffers from a disadvantage that it is becoming less environmentally acceptable.

Accordingly, there is a need for a package made of a polymer composition which overcomes these disadvantages.

The present invention provides a package comprising a wall which comprises a polymer composition, wherein the polymer composition comprises at least 10% by weight of a syndiotactic polypropylene and has a flexural modulus in the range of from 100 to 1000MPa (measured under ASTM D790).

It has been found that by using syndiotactic polypropylene as a component of the packaging wall, a package with increased flexibility may be produced. The package may be any type of package including a container, especially a relatively small container of volume perhaps no more than about 250ml, typically no more than about 100ml. The container may be a bottle, such as one with a wall of annular cross-section which typically has a base of the same material with the same or different thickness. The wall and/or base may be shaped to alter the mechanical properties thereof. The package may comprise a moulded article, especially an injection blow-moulded article.

In order to achieve increased flexibility of the packaging wall, the polymer composition comprises an amount of the syndiotactic polypropylene sufficient to decrease the flexural modulus of the polymer composition. Preferably, the polymer composition comprises at least 50% by weight of the syndiotactic polypropylene, more preferably at least 80% by weight of the syndiotactic polypropylene. It is therefore possible to produce a package in which the polymer composition has anything from a minor amount of syndiotactic polypropylene to one which comprises approximately 100% by weight of syndiotactic polypropylene. Typically, as the amount of syndiotactic polypropylene in the polymer composition is increased, the flexural modulus thereof decreases and the transparency thereof increases. By selecting appropriate parameters, such as thickness, diameter and, where necessary shaping such as ribbing for reinforcement, the flexibility of packaging walls may be controlled. The present applicants are not aware of any universally accepted standard for measuring flexibility of a packaging wall. However, in the context of the present invention, an incease in the flexibility of a packaging wall by the incorporation therein of an amount of the syndiotactic polypropylene can be measured by comparing such a wall with a control wall of equivalent dimensions under equivalent conditions in the absence of the syndiotactic polypropylene.

The polymer composition may comprise syndiotactic polypropylene blended with other polymers such as homopolymeric polypropylene in the presence or absence of nucleating agents, random copolymeric polypropylene in the presence or absence of nucleating agents and terpolymeric polypropylene, or with polymers other than polypropylenes. The use of such blends has the advantage of reducing cycle time in moulding operations. On the other hand, transparency of the packaging wall may be decreased when the syndiotactic polypropylene is used in a blend and so a balance of properties has to be struck depending on the type of packaging required.

Preferably the flexural modulus of the blank is in the range 400 to 800MPa, more preferably in the range 500-600MPa. It is found that low rigidity, allowing production of flexible containers such as squeezable containers, is achievable whilst still keeping the container wall thickness large enough to ensure good water vapour barrier properties. By reducing the flexural modulus of the polymer composition it is found that the surface of the package becomes pleasant to touch. In contrast to rigid prior art containers, containers according to the present invention have a relatively "warm" or "soft" touch reminiscent of a rubber material rather than a cold or hard material. Typically, the thickness of the wall is in the range 0.1 to 3.0mm, preferably in the range 0.5 to 2.0mm. In this way a water vapour barrier may be achieved, which is typically in the range 0.1-2gmm/m²/day, preferably 0.3-1.5gmm/m²/day, and more preferably around 0.6gmm/m²/day.

The transparency of the package according to the present invention is found to be very good without requiring any additives such as a nucleating agent or clarifying agent. Typically, the optical transmittance of the wall (measured under ASTM D1003) is at least 85% for a wall thickness of lmm, preferably at least 90%. Typically, the haze of the wall (measured under ASTM D1003) is no greater than 20% for a wall thickness of 1mm, preferably no greater than 5%. Advantageously, the polymer composition is substantially free of nucleating agents and/or clarifying agents.

The syndiotactic polypropylene used in the polymer composition typically has a low crystallinity of around 30% (*cf* 50% for homopolymeric polypropylene). The syndiotactic polypropylene may include some linear, branched or aromatic comonomer, such as an α-olefin. This is typically no more than 25% per mole syndiotactic polypropylene and preferably in the range 0.1 to 2%, more preferably in the range 0.1 to 0.6% per mole syndiotactic polypropylene. As the comonomer level increases, processibility becomes a problem and more time is required to cool a hot polymer composition in the manufacture of the package. The α-polyolefin comonomer is usually selected from ethylene, butene, hexene and octene and preferably comprises ethylene.

Syndiotactic polypropylene differs from isotactic polypropylene in that it is produced using a different and newly developed family of catalysts based on metallocene and aluminoxane; suitable catalysts are described in the literature for producing sPP. Useful sPP should be "highly" syndiotactic. One means of characterizing such a property is by reference to the pentad fraction as defined by A. Zambelli *et al* in Macromolecules, Vol. 6, 925 (1973) and ibid. Vol. 8, 687 (1975) using ¹³C-NMR. The syndiotactic pentad fraction of polymers useful herein should be 0.6 or higher, e.g., 0.8. Suitable catalyst systems are described in EP 0 414 147 (Tadashi *et al*). An example of the catalyst system which can be used for the preparation of sPP useful in the present invention is disclosed in EP 0 414 047 as comprising a transition metal compound having an asymmetric ligand and an aluminoxane, attributed to Ewen *et al*. (J. Am.Chem. Soc., 1988, 110, 6255-6256). And an example of the preferred catalyst system for the production of syndiotactic polypropylene comprises a transition metal compound and an aluminoxane.

Packages according to the present invention include containers for medical, pharmaceutical, health and beauty care and household products as well as packages to contain other products, including food packaging. Apart from good impact resistance and good water vapour barrier properties, the packages according to the present invention are found to be highly resistant to degradation of mechanical properties when irradiated by gamma radiation. This is particularly useful where sterilisation by gamma irradiation is required.

In a further aspect, the present invention provides a method for providing a packaging wall with increased flexibility, the method comprising forming the packaging wall from a polymer composition which comprises an amount of a syndiotactic polypropylene sufficient to decrease the flexural modulus of the polymer composition.

In a further aspect, the present invention provides a process for the production of a moulded article, which comprises introducing a polymer composition comprising a syndiotactic polypropylene into an injection mould cavity which is at a first temperature in the range 90 to 120°C to form a preform;
transferring the preform to a blow-mould cavity which is at a second temperature in the range 10 to 80°C; and
blow-moulding the preform to form a moulded article.

Preferably, the first temperature is around 100°C. Preferably, the second temperature is around 60°C. The polymer composition is typically introduced into the injection mould cavity at a temperature in the range 200 to 280°C, preferably 200 to 250°C, more preferably in the range 200 to 230°C.

According to the process, the moulded article, which may comprise a package as defined above, is typically manufactured by injection blow-moulding, using standard equipment. According to the present invention, it is found that the first temperature may be lower than typical temperatures known for injection blow-moulding of polypropylene (which are usually around 110°C or higher). Additionally, the second temperature can be made significantly higher for blow-moulding syndiotactic polypropylene as compared to temperatures hitherto used for other polymers. The turnaround time for production of moulded articles from syndiotactic polypropylene can be reduced, thereby to shorten the cycle time for article production from syndiotactic polypropylene-containing polymer compositions.

The preferred syndiotactic polypropylene according to the present invention is available commercially under product designations: EOD 96-28; EOD 30; and EOD 34 from Fina Oil & Chemical Company, Texas, USA.

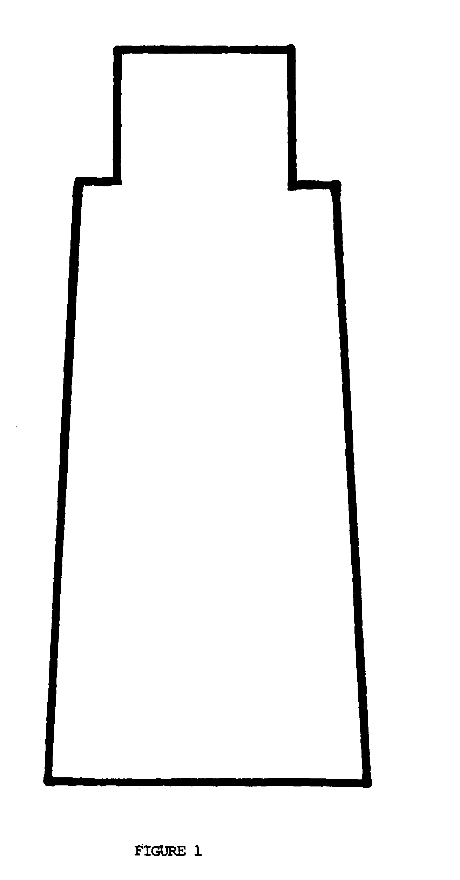

The present invention will now be described in further detail, by way of example only, with reference to the following Example and the accompanying drawing, in which: FIGURE 1 shows a container according to the present invention.

### Example

The following Table shows the results of a comparison between packaging walls made from sPP according to the invention and conventional polymers. It will be apparent from the Table that the haze and transmittance values (measured in accordance with ASTM D1003) for the sPP walls are superior to those of the conventional copolymeric polypropylenes rdm copo 7425 and rdm copo eod 94-21 and the conventional homopolymer PPH 3060.

**Table 1**

| **Polymer** | **Thickness** | **Haze** | **Transmittance** |
|---|---|---|---|
| | µm | % | % |
| eod 96-28 | 57 | 9.7 | 93.6 |
| eod 96-30 | 50 | 2.4 | 93.6 |
| eod 96-34 | 87 | 0.7 | 93.5 |
| rdm copo 7425 | 55 | 27.6 | 93.0 |
| rdm copo eod 94-21 | 58 | 9.4 | 93.2 |
| PPH 3060 | 72 | 45.0 | 92.5 |
| | | | |
| eod 96-28 | 214 | 16.3 | 93.2 |
| eod 96-30 | 201 | 17.6 | 93.0 |
| eod 96-34 | 134 | 2.4 | 93.4 |
| rdm copo 7425 | 174 | 58.1 | 91.9 |
| rdm copo eod 94-21 | 185 | 32.7 | 92.6 |
| PPH 3060 | 199 | 68.4 | 91.2 |
| | | | |
| eod 96-28 | 3305 | 31.1 | 87.3 |
| eod 96-30 | 3255 | 64.9 | 86.1 |
| eod 96-34 | 3340 | 29.0 | 86.4 |
| rdm copo 7425 | 3347 | 77.2 | 81.3 |
| rdm copo eod 94-21 | 3237 | 77.9 | 83.1 |
| PPH 4060 | 3303 | 93.5 | 79.6 |

## Claims

1. A package comprising a wall which comprises a polymer composition, wherein the polymer composition comprises at least 10% by weight of a syndiotactic polypropylene and has a flexural modulus in the range of from 100 to 1000MPa.

2. A package according to claim 1, wherein the flexural modulus of the polymer composition is in the range 400 to 800 MPa.

3. A package according to claim 2, wherein the flexural modulus of the polymer composition is in the range 450 to 600MPa.

4. A package according to any one of claims 1 to 3, wherein the polymer composition comprises at least 50% by weight of the syndiotactic polypropylene.

5. A package according to claim 4, wherein the polymer composition comprises at least 80% by weight of the syndiotactic polypropylene.

6. A package according to any one of the preceding claims, wherein the optical transmittance of the wall is at least 85% for a wall thickness of 1mm.

7. A package according to claim 6, wherein the optical transmittance of the wall is at least 90% for a wall thickness of 1mm.

8. A package according to any one of the preceding claims, wherein the haze of the wall is no greater than 20% for a wall thickness of 1mm.

9. A package according to claim 8, wherein the haze of the wall is no greater than 5% for a wall thickness of 1mm.

10. A package according to any one of the preceding claims, wherein the polymer composition is substantially free of nucleating agents and/or clarifying agents.

11. A package according to any one of the preceding claims, wherein the syndiotactic polypropylene has an α-olefin comonomer content in the range 0.1 to 2% per mol syndiotactic polypropylene.

12. A package according to claim 11, wherein the α-olefin comonomer content is in the range 0.1 to 0.6% per mole syndiotactic polypropylene.

13. A package according to claim 11 or claim 12, wherein the α-olefin comprises ethylene.

14. A package according to any one of the preceding claims, wherein the syndiotactic polypropylene includes 0.6 to 1 mole % of stereoregularity measured as an rrrr pentad using 13Cnmr.

15. A package according to claim 14, wherein the syndiotactic polypropylene includes 0.6 to 0.85 mole % of stereoregularity measured as an rrrr pentad using 13Cnmr.

16. A package according to any one of the preceding claims, which comprises a container.

17. A package according to any one of the preceding claims, which comprises a moulded article.

18. Use of a syndiotactic polypropylene as a component of a packaging wall for the purpose of increasing the flexibility thereof.

19. Use of a syndiotactic polypropylene as a component of a packaging wall for the purpose of increasing the gamma radiation resistance thereof.

20. Use according to claim 18 or claim 19, wherein the packaging wall is as defined in any one of claims 1 to 17.

21. A method for providing a packaging wall with increased flexibility, the method comprising forming the packaging wall from a polymer composition which comprises an amount of a syndiotactic polypropylene sufficient to decrease the flexural modulus of the polymer composition.

22. A method according to claim 21, wherein the packaging wall is as defined in any one of claims 1 to 17.

23. A process for the production of a moulded article, which comprises introducing a polymer composition comprising a syndiotactic polypropylene into an injection mould cavity which is at a first temperature in the range 90 to 120°C to form a preform;
transferring the preform to a blow-mould cavity which is at a second temperature in the range 10 to 80°C; and
blow-moulding the preform to form a moulded article.

24. A process according to claim 23, wherein the first temperature is around 100°C.

25. A process according to claim 23 or claim 24, wherein the second temperature is around 60°C.

26. A process according to any one of claims 23 to 25, wherein the moulded article comprises a package according to any one of claims 1 to 16.
